Europäisches Patentamt

European Patent Office

Office européen des brevets

(19)

(11) EP 0 886 628 B1

(12) FASCICULE DE BREVET EUROPEEN

(45) Date de publication et mention
de la délivrance du brevet:
**10.11.1999 Bulletin 1999/45**

(21) Numéro de dépôt: **97914391.4**

(22) Date de dépôt: **13.03.1997**

(51) Int Cl.$^6$: **C04B 40/00**

(86) Numéro de dépôt international:
**PCT/FR97/00452**

(87) Numéro de publication internationale:
**WO 97/34849 (25.09.1997 Gazette 1997/41)**

(54) **SUSPENSIONS AQUEUSES DE SILICE ET LEURS APPLICATIONS DANS LES COMPOSITIONS A BASE DE LIANT MINERAL**

WÄSSRIGE SUSPENSIONEN VON KIESELSÄURE UND DEREN VERWENDUNG IN MINERALISCHEN BINDEMITTEL

AQUEOUS SILICA SUSPENSIONS AND USE THEREOF IN INORGANIC BINDER COMPOSITIONS

(84) Etats contractants désignés:
**AT BE CH DE DK ES FI FR GB GR IE IT LI LU MC NL PT SE**

(30) Priorité: **15.03.1996 FR 9603309**

(43) Date de publication de la demande:
**30.12.1998 Bulletin 1998/53**

(73) Titulaire: **RHODIA CHIMIE**
**92408 Courbevoie Cédex (FR)**

(72) Inventeurs:
• **PRAT, Evelyne**
  **F-93500 Pantin (FR)**
• **FROUIN, Laurent**
  **F-94240 L'Hay-les-Roses (FR)**

(74) Mandataire: **Le Guen, Gérard et al**
**CABINET LAVOIX**
**2, place d'Estienne d'Orves**
**75441 Paris Cédex 09 (FR)**

(56) Documents cités:
**EP-A- 0 454 057**          **EP-A- 0 560 602**
**WO-A-95/25700**          **WO-A-96/01787**
**DE-U- 9 013 775**          **US-A- 5 149 370**
**US-A- 5 176 752**

• **PATENT ABSTRACTS OF JAPAN vol. 014, no. 412 (C-0755) & JP 02 157145 A (LION CORP.)**
• **DATABASE WPI Week 9036 Derwent Publications Ltd., London, GB; AN 90-268519 XP002018489 & DD 277 267 A (BAUAKAD DDR BAUSTOF)**
• **DATABASE WPI Week 8629 Derwent Publications Ltd., London, GB; AN 86-185369 XP002018490 & JP 61 117 143 A (DENKI KAGAKU KK)**

## Description

La présente invention concerne des suspensions aqueuses comprenant de la silice précipitée et leur utilisation dans la préparation de compositions à base de ciment ou de liant minéral analogue ou de compositions en dérivant.

L'invention s'applique à tous types de compositions comprenant un liant minéral, tel que du ciment, un laitier ou analogue, en tant qu'ingrédient de base ou en combinaison avec d'autres constituants.

Aux fins de la présente description, on entendra par "composition cimentaire" une composition à base de ciment ou tout autre liant minéral analogue, et d'eau. Ces compositions constituent des produits qui sont mis en oeuvre tels quels, notamment comme enduit, ou bien qui sont destinés à incorporer notamment des charges minérales de granulométrie variable.

De telles compositions renfermant un liant minéral et une charge minérale sous forme de granulats sont considérées de façon très générale comme des bétons.

Bien que le spécialiste ait coutume de qualifier plus spécifiquement de béton une composition dans laquelle la charge minérale est à base de granulats relativement gros (de l'ordre de 4 à 15 mm), et de mortier une composition dans laquelle la charge minérale est à base de granulats moins gros (inférieurs à 4 mm), le terme "béton" sera employé indifféremment dans la présente description pour désigner tous types de compositions quelles que soient leur granulométrie afin de simplifier l'exposé.

Il est souhaitable de pouvoir contrôler les propriétés de ces diverses compositions aussi bien lors de leur fabrication, que de leur mise en oeuvre, ainsi que des produits en dérivant après durcissement.

Ainsi, les compositions de béton pour le gros oeuvre (réalisation de murs, voiles, poteaux, chapes ciment, dalles, sols industriels), doivent satisfaire des exigences particulières en matière de :

- cinétique de prise rapide pour décoffrage précoce ;
- faible retrait plastique et absence de fissures particulièrement pour les chapes ciments ;
- bonnes propriétés mécaniques à 28 jours ;
- durabilité (résistance à l'abrasion, faible perméabilité aux gaz et aux liquides) ;
- étanchéité pour le cas particulier des bétons souterrains ou bétons marins en contact avec eaux.

En outre, les bétons peuvent soit être fabriqués sur le lieu du chantier, soit être fabriqués dans une centrale et acheminés sur le lieu d'utilisation (béton prêt à l'emploi). Pour que la composition puisse conserver des propriétés acceptables, même pendant une courte période, il faut lui assurer une stabilité à l'état hydraté, notamment en conservant intacte sa fluidité ou en limitant la ségrégation des matières en suspension.

Plus spécifiquement, les bétons architectoniques, c'est-à-dire les bétons apparents, doivent satisfaire en outre des exigences au niveau de l'esthétique:

- aspect homogène de la surface ;
- réduction des efflorescences qui forment des dépôts de sels en surface (en particulier pour les bétons acidés).

Les bétons préfabriqués pour la réalisation d'éléments de façades, de pavés, dallages, tuyaux doivent plus particulièrement présenter une faible perméabilité aux gaz et aux liquides pour une durabilité optimale, ainsi que les mêmes qualités esthétiques que les bétons architectoniques pour les éléments visibles.

Les compositions de mortiers ou d'enduits pour le second oeuvre (enduits de ragréage, enduits de lissage, enduits de façade, mortiers colles, enduit de projection) doivent elles aussi satisfaire un certain nombre d'exigences particulières :

- bonne rétention d'eau pour éviter le départ d'eau par pénétration dans le support poreux ou par séchage préférentiel en surface (risque de fissuration et de farinage en surface) ;
- bonne adhérence au support ;
- résistance à l'abrasion et aux chocs ;
- bonne fluidité associée à une bonne rétention d'eau (particulièrement pour les enduits de lissage), ces propriétés contradictoires étant difficiles à obtenir conjointement.

De façon générale, lors de l'utilisation, des paramètres critiques sont la fluidité pour assurer la mise en oeuvre, le taux de ressuage ou l'adhérence au support, la rétention d'eau.

Pour satisfaire ces exigences, on incorpore habituellement aux compositions cimentaires ou aux compositions en dérivant des additifs appropriés. Cependant, il n'est pas rare qu'un additif procure, à côté de l'effet positif pour lequel il est employé, un effet néfaste sur une autre propriété. Ainsi, un agent fluidifiant peut améliorer la fluidité d'une composition, mais les hautes teneurs parfois nécessaires pour atteindre le résultat désiré favorisent très nettement le ressuage et diminuent la cinétique de prise et donc d'acquisition de résistance mécanique aux jeunes âges (lutte contre la fissuration, aptitude au décoffrage, mise en service précoce...).

De même, les retardateurs de prise permettant de conserver et de transporter une composition pendant un certain temps après sa préparation, ont également un effet très marqué sur le ressuage et la cinétique de prise.

De telles difficultés apparaissent en particulier dans le cas des compositions de pâtes cimentaires et de bétons fluides auto-nivelants qui doivent présenter, selon les cahiers des charges classiques, des caractéristiques rhéologiques strictes d'affaissement (mesuré au cône d'Abrams) ou d'étalement statique ou dynamique.

Les solutions permettant l'obtention de bétons ou mortiers fluides, connues à ce jour, consistent soit à optimiser la courbe granulométrique par l'introduction de fines ou d'ultra-fines comme décrit dans le brevet EP-A-0 184 386, cette solution présentant, outre le désagrément de nécessiter la manipulation de quantités importantes de poudre, l'inconvénient d'être très sensible à de petites variations de teneur ou de qualité des produits utilisés, ce qui la rend en pratique difficilement utilisable sur un chantier, soit à ajouter, en quantités importantes, des fluidifiants, retardateurs et éventuellement agents rétenteurs d'eau pour maintenir la maniabilité du matériau pendant une durée suffisante, ce qui entraîne généralement un retard de prise qui pénalise la productivité du chantier (décoffrage retardé ou nécessité de ragréage en cas de décoffrage précoce) et une grande sensibilité à des petites variations autour de la composition optimisée.

Dans la pratique, l'on est souvent confronté à des problèmes de diminution rédhibitoire de la maniabilité en cas d'erreur de dosage, de ségrégation du mortier ou du béton, de ressuage important, d'allongement de la durée de prise et d'abaissement des propriétés mécaniques finales, en particulier dans le cas d'un surdosage en eau.

De fait, il s'avère très difficile de produire des compositions cimentaires, ou des compositions en dérivant, répondant à tous les impératifs souhaités en vue d'une application.

Il était connu de US-5 149 370 et GB-2 212 489 d'améliorer les propriétés de ressuage et de ségrégation des compositions en y ajoutant des sols de silice. Toutefois, les propriétés de ces compositions étaient encore insuffisantes.

Le document WO 96/01787 (PHONE POULENC CHIMIE) decrit les problèmes des suspensions conventionnelles qui sont utilisées dans l'industrie du béton, et notamment à cause de leur instabilité (tendance à sédimenter ou gélifier) et leur viscosité élevée. Il propose une suspension aqueuse de silice de précipitation avec les mêmes caractéristiques que la suspension de silice de la présente demande, présentant une faible viscosité dans le temps, et est très stable. Le contenu du surnageant donné est un indice de haute stabilité. Cette suspension trouve application comme additif dans le beton permettant notamment d'accélérer sa prise et/ou d'améliorer ses propriétés mécaniques.

La présente invention se propose de répondre à cette demande d'additifs améliorés permettant de combiner plusieurs propriétés avantageuses parmi celles mentionnées ci-dessus.

L'invention a pour but de fournir un nouvel additif pour compositions cimentaires ou compositions en dérivant permettant de diminuer les effets de ressuage et de ségrégation des compositions de béton.

L'invention a également pour but de fournir un additif permettant d'allier une fluidité améliorée, une bonne rétention d'eau, même dans le cas de fortes teneurs en eau et/ou en agents fluidifiants ou plastifiants, et d'assurer au produit durci une bonne durabilité, notamment une réduction de la perméabilité aux eaux et aux gaz permettant de réduire les efflorescences.

A cet effet, l'invention a pour objet une suspension aqueuse comprenant un mélange d'au moins une suspension aqueuse de silice précipitée et d'au moins un latex, dans lequel ladite suspension aqueuse de silice précipitée présente une teneur en matière sèche comprise entre 10 et 40 % en poids, a une viscosité inférieure à $4.10^{-2}$ Pa.s pour un cisaillement de 50 $s^{-1}$ et produit après centrifugation à 7500 tours par minute pendant 30 minutes un surnageant contenant plus de 50 % du poids de la silice initialement en suspension.

Le premier composant essentiel du mélange formant la suspension aqueuse objet de l'invention est une suspension aqueuse de silice précipitée à teneur élevée en matière sèche, présentant une faible viscosité et une bonne stabilité dans le temps.

De telles suspensions sont décrites, ainsi que leur procédé de fabrication dans FR-A-2 722 185.

De préférence, la teneur en matière sèche de ladite suspension est comprise entre 15 et 35 % en poids. La viscosité de ladite suspension est avantageusement inférieure à $4.10^{-2}$ Pa.s pour un cisaillement de 50 $s^{-1}$.

Ces suspensions sont très stables et leur stabilité peut être appréciée grâce à un test de sédimentation qui consiste à centrifuger ladite suspension à 7500 tr/min pendant 30 minutes. La quantité de silice contenue dans le surnageant obtenu à l'issue de cette centrifugation, mesurée après séchage du surnageant à 160°C jusqu'à obtention d'un poids constant de matière, représente plus de 50 %, de préférence plus de 60 % du poids de la silice contenue dans la suspension.

Avantageusement, la quantité de silice contenue dans le surnageant obtenu après centrifugation représente plus de 70 %, en particulier plus de 90 % du poids de la silice en suspension.

Une autre caractéristique de ces suspensions concerne la granulométrie des particules de silice en suspension.

En effet, les suspensions de silice concentrées connues jusqu'à présent, outre leur viscosité élevée, présentent l'inconvénient de comporter en suspension des agglomérats de grande taille qui induisent une sédimentation au cours du temps.

La répartition granulométrique des matières en suspension peut être définie au moyen du diamètre médian $D_{50}$, qui est le diamètre de grain tel que 50 % de la population de grains en suspension présentent un diamètre inférieur.

De même, $D_{95}$ représente le diamètre de grain tel que 95 % de la population de grains en suspension présentent un diamètre inférieur.

Une autre grandeur caractéristique des suspensions est le facteur de désagglomération $F_D$. Ce facteur, d'autant plus élevé que la suspension de silice est désagglomérée, est indicatif du taux de fines, c'est-à-dire du taux de particules de taille inférieure à 0,1 µm qui ne sont pas détectées par un granulomètre courant.

Les caractéristiques granulométriques des suspensions de silice sont déterminées grâce à une mesure granulométrique effectuée sur les suspensions, à l'aide d'un granulomètre SYMPATEC.

$F_D$ est mesuré en introduisant dans un granulomètre un volume connu V de suspension diluée de manière à obtenir une teneur en silice de 4 % en poids et est égal au rapport (10 x V en ml/concentration optique détectée par le granulomètre).

Les agglomérats de silice présents dans ces suspensions sont de faible taille.

De préférence, la répartition granulométrique des agglomérats en suspension est telle que leur diamètre médian $D_{50}$ est inférieur à 5µm et le facteur de désagglomération $F_D$ est supérieur à 3 ml.

Avantageusement, le diamètre $D_{50}$ est inférieur à 2 µm, le facteur $F_D$ est supérieur à 13 ml et en outre, le diamètre $D_{95}$ est inférieur à 20 µm.

Le second composant essentiel du mélange formant la suspension aqueuse objet de l'invention est un latex, à savoir une suspension aqueuse de particules de résine naturelle ou synthétique.

De manière avantageuse, lesdites particules sont des produits de polymérisation d'au moins un monomère à insaturation éthylénique.

De préférence, le latex lui-même est issu de la polymérisation en émulsion d'au moins un monomère à insaturation éthylénique.

En particulier, le monomère à insaturation éthylénique peut être avantageusement choisi parmi le styrène, le butadiène, l'acide acrylique, l'acide méthacrylique, les esters d'acide acrylique ou méthacrylique, de préférence en $C_1$-$C_{12}$, les esters vinyliques, et leurs mélanges.

Le latex utilisable suivant l'invention peut ainsi comprendre des particules de résine homopolymère ou bien copolymère, un exemple étant un latex de caoutchouc styrène-butadiène.

La taille des particules du latex est variable suivant l'application visée. Dans un premier mode de réalisation avantageux, cette taille est de 0,1 à 5 µm, On peut citer notamment des latex dont la taille des particules est de 0,1 à 0,3 µm, de préférence des latex styrène/butadiène, ou bien des latex dont la taille de particules est de 1 à 5 µm, de préférence des latex acétate/versatate. Dans un second mode de réalisation avantageux, cette taille est d'au plus 100 nm ; ces nanolatex peuvent être de nature très variée.

Les deux composants précités sont associés dans des proportions appropriées à l'application souhaitée.

De manière générale, il est préférable que la suspension aqueuse selon l'invention comprenne de 3 à 25 parties en poids de silice, exprimées en poids sec, pour 100 parties en poids de suspension, de manière plus avantageuse de 5 à 20 parties en poids de silice pour 100 parties de suspension.

Par ailleurs, il est préférable que le poids sec du latex représente la valeur de 5 à 50 parties pour 100 parties en poids de suspension aqueuse selon l'invention, de manière avantageuse de 10 à 40 parties pour 100 parties de suspension.

Les suspensions aqueuses selon l'invention peuvent être incorporées dans des pâtes cimentaires ou plus généralement des compositions cimentaires, à base de liant minéral et d'eau, auxquelles elles procurent notamment résistance à la ségrégation et rétention d'eau associées avec une augmentation de fluidité en raison d'un effet de synergie entre la suspension de silice et le latex.

L'invention concerne donc également des compositions à base d'un liant minéral et d'eau, caractérisées en ce qu'elles comprennent une suspension aqueuse telle que définie précédemment.

Le liant minéral peut être de tout type connu, notamment du ciment de type PORTLAND CPA H.P, CPA 55, CPJ 45, CPA CEM I, CPA CEM I PM, CPA CEM I PMES, CPJ CEM II, CPJ CEM II PM, CPJ CEM II PMES, CHF CEM II, CLK CEM II, laitiers de hauts fourneaux ou des liants pouzzolaniques. Le rapport de l'eau au liant est variable et dépend avant tout de la fluidité désirée pour la composition. Ce rapport peut être en particulier de 0,3 à 2, de préférence de 0,3 à 1,5.

Dans ces compositions, il est préférable que la silice représente de 0,3 à 5 % en poids par rapport au liant, exprimé en rapport de poids sec, de préférence de 0,8 à 1,5 %.

Il est également avantageux que le poids sec du latex représente la valeur de 0,2 à 50 % en poids par rapport au liant, exprimé en rapport de poids secs, de préférence de 3 à 30 %.

Pour compléter l'effet procuré par la suspension aqueuse selon l'invention, les compositions peuvent comprendre en outre au moins un agent fluidifiant. Cet agent peut être choisi parmi les substances communément utilisées à cet effet dans les compositions cimentaires. Il sera avantageusement choisi parmi les lignosulfonates, la caséine, les polynaphtalène, en particulier les polynaphtalène sulfonates de métaux alcalins, les mélamines, les polymélamines, les dérivés du formaldéhyde, les polyacrylates de métaux alcalins, les polycarboxylates de métaux alcalins et les polyoxyde d'éthylène greffés.

Un tel agent peut avantageusement être utilisé à raison de 0,1 à 10 % en poids par rapport au liant.

Cet agent peut être introduit séparément de la suspension aqueuse selon l'invention, ou bien simultanément au moyen d'une suspension comprenant à la fois la suspension de silice, le latex et ledit agent.

De façon similaire, les compositions peuvent comprendre en outre au moins un agent rétenteur d'eau, qui peut être choisi parmi les substances communément utilisées à cet effet dans les compositions à base de ciment. Il sera avantageusement choisi parmi les alcools polyvinyliques éventuellement modifiés, les polyéthylène glycols, les polyoxyéthylènes, les polymères acryliques, notamment les polyacrylamides, les polysaccharides d'origine bactérienne, comme la gomme xanthane, les gommes guar, les gommes guar cationisées, les extraits de graine de caroube, les alginates, les pectines, les celluloses, les éthers cellulosiques, notamment les carboxyalkyl celluloses, alkylcelluloses, hydroxyalkylcelluloses, telles que les méthylhydroxypropylcelluloses, la polyvinylpyrrolidone, les sucres, notamment le dextrose, le ribose, les amidons de maïs, froments cationisés ou non, les lignites, léonardites et produits dérivés, des polyacrylates de métaux alcalins et les polystyrènesulfonates.

Un tel agent peut avantageusement être utilisé à raison de 0,01 à 10 % en poids par rapport au liant.

Par ailleurs, les compositions peuvent également comprendre avantageusement un accélérateur de prise, tel que le sulfate d'aluminium, en une teneur de 0,01 à 3 % en poids par rapport au liant (exprimée en rapport de poids secs). Dans le cas du sulfate d'aluminium, cette teneur est exprimée en poids de sulfate d'aluminium anhydre.

Cet agent peut être introduit séparément de la suspension aqueuse selon l'invention, ou bien simultanément au moyen d'une suspension comprenant à la fois la suspension de silice, le latex et ledit agent.

On utilisera aussi avantageusement dans les compositions des fibres de renforcement permettant d'améliorer la résistance aux fissurations. Ces fibres sont de préférence choisies parmi des fibres d'alcool polyvinylique, de polypropylène, de polyéthylène, d'acier, de polyacrylonitrile, de cellulose, de carbone, de kevlar , de polyamide et de polyester.

Les compositions cimentaires à base d'un liant minéral et d'eau qui viennent d'être décrites peuvent être utilisées en tant que telles ou combinées à d'autres matériaux, notamment pour former des compositions de béton (ou mortier). Comme il a été précisé précédemment, on entend par béton le mélange d'un liant minéral, d'eau et de granulats de granulométrie variable, notamment de graves, de sables et éventuellement de fines, voire d'ultra-fines.

A cet égard, l'invention a également pour objet des compositions de béton comprenant une suspension aqueuse précédemment décrite. Ces compositions peuvent être obtenues en mélangeant les suspensions selon l'invention avec un liant minéral, des granulats et éventuellement de l'eau complémentaire, ou bien en mélangeant une composition cimentaire décrite précédemment avec des granulats et éventuellement de l'eau complémentaire.

L'invention a de ce fait également pour objet l'utilisation des suspensions aqueuses ou des compositions cimentaires précédemment décrites dans des compositions de béton, en particulier les bétons de spécialité des types précités et des enduits de second oeuvre.

On utilisera avantageusement des suspensions aqueuses ou des compositions cimentaires répondant à au moins une des caractéristiques préférées indiquées précédemment en ce qui concerne les teneurs relatives en silice et en latex, et éventuellement en agents fluidifiants ou rétenteurs d'eau, et le cas échéant en ciment.

La proportion de granulats dans ces compositions de béton peut être choisie de façon connue en soi dans les gammes habituelles correspondant au type de béton souhaité.

L'invention trouve une application particulière dans les bétons dits de spécialité qui doivent manifester des propriétés particulières d'aspect de surface, de résistance mécanique, de durabilité du produit fini, de fluidité lors de la mise en oeuvre et de faible tendance à la ségrégation.

On peut citer par exemple les bétons fluides, les bétons pour la fabrication de dallages (chapes ciment et mortiers fluides pour chapes), les bétons sous-marins qui doivent être aisément pompables et injectables, les bétons de parement, les bétons préfabriqués par centrifugation ou pressage à chaud, les enduits de lissage et de ragréage de surface, notamment de sols, les bétons colorés, qui doivent présenter une surface homogène sans efflorescence et une teinte de base relativement claire, ainsi que les bétons légers, les bétons pour sols industriels, les bétons étanches et les bétons de cimentation des puits de pétrole, qui doivent avoir une porosité réduite, tous ces bétons voyant leurs propriétés améliorées grâce à l'invention.

Plus particulièrement, dans le cas des bétons et ciments fluides, on atteint grâce à l'invention la fluidité élevée qui est souvent désirable, tout en améliorant la faculté de rétention d'eau des compositions, ce qui permet de faciliter la mise en place et de réduire les problèmes de fissuration dus à un départ d'eau entraînant un retrait plastique peu après la mise en place.

L'invention a ainsi pour objet l'utilisation des suspensions aqueuses précédemment décrites en tant qu'agent de rétention d'eau dans des compositions cimentaires ou des bétons. Cette utilisation, qui permet de réduire le retrait plastique et par conséquent la fissuration, est particulièrement intéressante pour les chapes ciments et les enduits de lissage.

Parmi les propriétés avantageuses conférées aux compositions à base de ciment ou aux compositions de béton par les suspensions aqueuses selon l'invention, on compte plus particulièrement la faible tendance à la ségrégation des compositions hydratées, notamment des compositions à forte teneur en eau.

A cet égard, l'invention a également pour objet l'utilisation de suspensions aqueuses telles que définies précédemment, en tant qu'agent anti-ségrégation dans des compositions cimentaires à base d'un liant minéral et d'eau et dans des compositions de béton, notamment dans des compositions où le rapport pondéral eau/ciment ou plus généralement eau/liant est de 0,3 à 2, de préférence de 0,3 à 1,5.

L'invention est également très avantageuse pour la réalisation de bétons de parement préfabriqués ou de bétons étanches, car elle permet d'obtenir une meilleure dispersion du ciment, une meilleure homogénéité. On améliore ainsi l'aspect de surface en termes de régularité et la durabilité du produit durci grâce à la pénétration limitée de l'eau et des gaz.

Dans le cas des produits de parement, des enduits de lissage et de ragréage, cela s'accompagne d'un éclaircissement de la teinte et d'une amélioration de l'aspect de surface, d'une meilleure résistance à la carbonatation et d'une limitation de l'apparition d'efflorescences, ainsi que d'une réduction de la corrosion des armatures.

L'invention a également pour objet l'utilisation de suspensions aqueuses précédemment décrites en tant qu'agent réduisant la perméabilité aux gaz et aux liquides dans des compositions à base d'un liant minéral et d'eau ou dans des compositions de béton.

La résistance à la pénétration de l'eau est un avantage décisif pour l'étanchéité d'ouvrages situés en zone inondable ou humide ou d'ouvrages destinés à recevoir de l'eau (réservoirs, barrages, aqueducs, piscines, conduites d'eau).

D'autres avantages de l'invention apparaitront plus clairement à la lumière des exemples suivants.

Exemple de préparation : Préparation d'une suspension de silice précipitée

1. On prépare un gâteau de silice précipitée G1 de la manière suivante.
   Dans un réacteur en acier inoxydable muni d'un système d'agitation par hélices et d'un chauffage par double enveloppe, on introduit :

- 346 litres d'eau,
- 7,5 kg de $Na_2SO_4$ (électrolyte),
- 587 litres de silicate de sodium aqueux présentant un rapport pondéral $SiO_2/Na_2O$ égal à 3,50 et une densité à 20°C égale à 1,133.

La concentration en silicate (exprimée en $SiO_2$) dans le pied de cuve est alors de 85 g/l. Le mélange est porté à 79°C tout en le maintenant sous agitation. On introduit ensuite dans le mélange 386 litres d'acide sulfurique dilué de densité à 20°C égale à 1,050, jusqu'à obtenir une valeur de pH égale à 8 (mesurée à la température du milieu). La température du milieu réactionnel est de 79°C pendant les 25 premières minutes, puis elle est portée de 79°C à 86°C en 15 min; et maintenue ensuite à 86°C jusqu'à la fin de la réaction.

Une fois la valeur du pH égale à 8 atteinte, on introduit conjointement dans le milieu de réaction 82 litres de silicate de sodium aqueux de rapport pondéral $SiO_2/Na_2O$ égal à 3,50 et de densité à 20°C égale à 1,133 et 131 litres d'acide du type décrit ci-avant, cette introduction simultanée d'acide et de silicate étant réalisée de manière telle que le pH du milieu de réaction soit constamment égal à 8± 0,1. Après introduction de la totalité du silicate on continue à introduire l'acide dilué pendant 9 min de façon à amener le pH du milieu réactionnel à une valeur égale à 5,2. On arrête alors l'introduction d'acide et on maintient la bouillie réactionnelle 5 min supplémentaires sous agitation.

La durée totale de la réaction est de 118 min.

On obtient une bouillie de silice précipitée qui est filtrée et lavée au moyen d'un filtre-presse de telle sorte que l'on récupère finalement un gâteau G1 de silice dont la perte au feu est de 78 % (donc une teneur en matière sèche de 22 % en poids) et dont la teneur en $Na_2SO_4$ est de 1 % en poids.

2. On introduit dans un déliteur malaxeur CELLIER, 4 kg du gâteau G1 (obtenu par filtration presse et présentant une teneur en matière sèche de 22 % en poids et une teneur en $Na_2SO_4$ de 1 % en poids), préalablement porté à 60°C.
   Puis, on introduit simultanément, pendant la défloculation du gâteau 13,1 ml d'une solution d'aluminate de sodium (ayant une teneur en $Al_2O_3$ de 22 % en poids et une teneur en $Na_2O$ de 18 % en poids ; densité : 1,505) et 7,47 ml d'une solution d'acide sulfurique à 80 g/l (densité : 1,505), de manière à maintenir le pH à une valeur de 6,5.

Le rapport pondéral $Al/SiO_2$ est d'environ 2600 ppm.

On laisse mûrir pendant 20 minutes en poursuivant la défloculation mécanique.

La suspension G2 de silice obtenue est caractérisée par :

- une viscosité de 0,06 Pa.s (mesurée sous un cisaillement de 50 $s^{-1}$ pendant 1 minute) ;
- une granulométrie telle que $D_{10} = 5$ µm, $D_{50} = 19$ µm, $D_{90} = 60$ µm.

Au bout d'une semaine de stockage, on observe:

- la formation, au fond du récipient de stockage, d'un dépôt excessivement difficile, voire impossible, à redisperser ;
- une augmentation de la viscosité de la suspension : sa viscosité est alors de 0,45 Pa.s (mesurée sous un cisaillement de 50 $s^{-1}$ pendant 1 minute).

3. On alimente la chambre d'un broyeur NETZCH LME1 avec 2 litres de suspension G2 (prélevée après le délitage), présentant une teneur en matière sèche de 22% en poids, à un débit de 5 litres/h ; le taux de remplissage de la chambre avec des billes d'alumine (diamètre : 0,6-1 mm) est de 75 % et la vitesse de rotation de l'arbre est de 2000 tr/min.

A l'issue de cette étape de broyage humide, on obtient une suspension caractérisée par:

- une viscosité de 29 mPa.s (mesurée sous un cisaillement de 50 $s^{-1}$ pendant 1 minute) ;
- une granulométrie telle que $D_{10} = 1,13$ µm, $D_{50} = 4,1$ µm, $D_{90} = 9,33$ µm ;
- une teneur en matière sèche de 22 % en poids ;
- une quantité de silice retrouvée dans le surnageant de 63 % (suivant le test de sédimentation sous centrifugation précédemment défini).

Dans un réacteur agité, on introduit 4 540 g de la suspension de silice ainsi préparée, et on ajuste le pH à 9,5, sous agitation à l'aide de soude concentrée, afin de stabiliser le milieu.

On introduit ensuite sous agitation, avec un débit de 100 g/min 5 000 g d'un latex de caoutchouc styrène-butadiène à 50 % d'extrait sec, présentant une taille de particules de 0,1-0,2 µm, commercialisé sous le nom Sa 112 par la société Rhône-Poulenc.

Après une demi-heure d'agitation, on réajuste le pH à 9,5 et on obtient une suspension présentant une viscosité de 30 mPa.s sous un cisaillement de 50 $s^{-1}$.

Cette suspension est parfaitement stable vis-à-vis de la sédimentation pendant plus de trois mois.

Elle contient environ 10 % en poids sec de silice et 26 % en poids sec de latex.

Exemple d'application 1 : Réalisation d'un béton de parement

Essai 1

On prépare une composition de béton selon la formule suivante :

| Granulats (5-15) | 1 000 kg |
|---|---|
| Granulats 0-4 (sable) | 800 kg |
| Ciment HPR Fluidifiant (Rhéobuild 2000 PF | 425 kg |
| commercialisé par MBT) (0,1 % par rapport au poids de ciment) | 1,7 kg |
| Eau | 147 l |

Dans un malaxeur planétaire de type HOBART, on introduit les granulats que l'on malaxe pendant une minute, puis on introduit le ciment et l'on malaxe pendant 30 secondes.

On introduit ensuite en poursuivant le malaxage, l'eau et le fluidifiant ainsi que 42,5 kg (10% par rapport au ciment) de la suspension aqueuse de l'exemple de référence.

La quantité de silice ajoutée correspond à 1 % du poids de ciment introduit.

Le rapport pondéral eau/ciment de cette composition de béton est donc de 0,41.

Essai 2

On prépare de façon similaire une composition de béton en augmentant la teneur en eau initiale de façon à obtenir un rapport pondérai eau/ciment de 0,49, la quantité de tous les autres constituants étant maintenue identique.

Essais comparatifs 1 et 2

On prépare des compositions analogues à celles des essais 1 et 2 dans lesquelles on omet d'introduire la suspension aqueuse de l'exemple A mais le rapport eau/ciment est conservé.

Les caractéristiques de ces quatre compositions sont évaluées en coulant un béton dans des moules étanches identiques et en démoulant après trois jours.

On remarque tout d'abord que dans les essais 1 et 2, la fluidité du béton est meilleure et la mise en place dans le coffrage se fait mieux. Par ailleurs, dans les essais 1 et 2, on n'observe pas de ségrégation de granulats ni de ressuage ce qui était jusqu'à présent incompatible avec une bonne fluidité.

On évalue également les caractéristiques des bétons durcis. La blancheur du produit est mesurée au moyen d'un colorimètre XENOTEST et quantifiée au moyen des coordonnées chromatiques $L^+$, $a^+$ et $b^+$ dans le système CIE 1976 ($L^+$, $a^+$, $b^+$) tel que défini par la Commission Internationale d'Eclairage et répertorié dans le Recueil des Normes Françaises (AFNOR) couleur colorimétrique No XO8-12 (1983).

On note une meilleure homogénéité de la surface et un éclaircissement de teinte sensible dans les essais 1 et 2.

La formation éventuelle d'efflorescence est vérifiée au bout de 28 jours. A cette date, aucune efflorescence n'est apparue dans les essais 1 et 2 alors que les produits des essais comparatifs présentent de nombreuses efflorescences blanchâtres en surface.

Les résultats sont consignés dans le tableau 1 suivant.

Tableau 1

| Essai | E/C | Suspension de silice (% par rapport au ciment) | Blancheur | | | Efflorescence à 28 jours |
|---|---|---|---|---|---|---|
| | | | L | a | b | |
| 1 | 0,41 | 10 | 58 | -0,08 | 3,1 | non |
| 2 | 0,49 | 10 | 58,05 | -0,07 | 3,25 | non |
| comp. 1 | 0,41 | 0 | 55 | -0,00 | 3,8 | oui |
| comp.2 | 0,49 | 0 | 55 | -0,03 | 3,99 | oui |

Il semblerait que l'action combinée de la silice et du latex apporte un comblement de la porosité du béton qui réduit les efflorescences à terme.

On observe également que la perméabilité à l'eau et aux gaz des bétons des essais 1 et 2 est réduite par rapport à celles des essais comparatifs 1 et 2, ce qui conduit à une plus grande durabilité par résistance à la carbonatation, aux attaques par les eaux agressives, ....

En outre, l'adhérence du béton sur un support est améliorée du fait de la présence de la suspension de silice et du latex, ainsi que la résistance à l'abrasion (diminution du poussiérage).

On observe également une diminution du nombre de fissures due à une amélioration de la rétention d'eau.

Exemple d'application 2 : Réalisation d'une composition cimentaire à teneur en eau élevée (ou coulis)

Cet exemple vise à mettre en évidence l'effet de synergie produit par la suspension de silice et le latex sur les propriétés rhéologiques et de stabilité de pâtes cimentaires à teneur en eau élevée.

Une première série d'essais non conformes à l'invention est réalisée, montrant que la silice ou le latex seuls ne résolvent pas les problèmes posés par ces coulis, que l'on compare à deux essais selon l'invention.

Essai comparatif 1

On prépare un coulis comprenant une suspension de silice préparée de la même manière que dans l'exemple de préparation A, mais sans ajouter de latex. Il répond à la formule suivante :

- ciment HTS100 g
- fluidifiant (Melmentplast N40)       2,5 g *
- retardateur de prise       0,8 g * (Melretard)
- suspension aqueuse de silice à 23 % d'extrait sec       5 g
- eau       24 g

Le rapport eau/ciment est donc de 0,28.

Dans un bécher agité par une pale on introduit l'eau, le fluidifiant et le retardateur, puis l'on ajoute sous agitation le ciment pendant 3 minutes. La suspension de silice est alors introduite sous agitation que l'on poursuit pendant 10 minutes.

Essai comparatif 2

On prépare de la même façon un coulis similaire où le rapport eau/ciment est de 0,35.

Essai comparatif 3

On prépare un coulis répondant à la formule suivante :

- ciment HTS       100 g
- fluidifiant (Melmentplast)       2,5 g
- retardateur (Melretard)       0,8 g
- latex styrène-butadiène en suspension aqueuse à 50 % (SB 112)       5 g
- eau       25 g

Le rapport eau/ciment est donc de 0,28. La préparation est analogue à l'essai comparatif 1, le latex étant introduit en lieu et place de la suspension de silice,

Essai 1

Selon l'invention, on prépare un coulis répondant à la formule :

- ciment HTS       100 g
- fluidifiant (Melmentplast)       2,5 g
- retardateur (Melretard)       0,8 g
- suspension aqueuse de l'exemple A       9,6 g
  soit : silice (poids sec ) : 1 g
              latex (poids sec) : 2,5 g
- eau       22 g

Le rapport eau/ciment est de 0,28. La préparation est analogue à celle des essais comparatifs.

Essai 2

On prépare un coulis analogue à celui de l'essai 1 où la teneur en eau est ajustée pour obtenir un rapport eau/ciment de 0,35.

Ces cinq compositions sont soumises aux mesures rhéologiques suivantes effectuées sur un appareil RHEOMAT 115 équipé d'une cellule MS DIN 145. On soumet le coulis à un cisaillement croissant de 0 à 1000 $s^{-1}$ en 1 minute, puis à un cisaillement constant de 1000 $s^{-1}$ pendant 1 minute, et l'on fait décroître le cisaillement jusqu'à 0 $s^{-1}$ en 1 minute, tout en mesurant la viscosité. On relève la viscosité finale.

L'aptitude à la ségrégation et au ressuage est évaluée :

- en mode statique : on observe l'aspect d'une éprouvette remplie de 200 ml de coulis, sur une durée de 24 heures;
- en mode dynamique sous pression : on dispose une quantité donnée de coulis dans un filtre API au-dessus duquel on impose une pression d'air de $7.10^5$ Pa ; on mesure la quantité d'eau expulsée de la pâte et l'on mesure après dessication à 160° C l'extrait sec de la partie supérieure (côté air) et de la partie inférieure (côté filtre) du gâteau de filtration obtenu.

*commercialisés par CIA

L'extrait sec du prélèvement inférieur ou supérieur du gâteau est défini par la formule :

$$\text{extrait sec} = \frac{\text{masse totale du prélèvement - masse d'eau du prélèvement}}{\text{masse totale du prélèvement}} \times 100$$

Un écart entre les deux valeurs est indicatif d'un gâteau hétérogène, un extrait sec inférieur plus élevé que l'extrait sec supérieur signifiant une ségrégation.

Les résultats sont exprimés par les valeurs suivantes :

-   le pourcentage d'eau recueillie par filtration

$$Er = \frac{\text{quantité d'eau recueillie}}{\text{quantité de coulis initiale}} \times 100$$

-   la teneur en eau du gâteau après filtration

$$Tf = \frac{\text{eau initiale - eau recueillie par filtration}}{\text{masse du gâteau filtré}} \times 100$$

par rapport à la teneur en eau initiale du coulis Ti avec

$$Ti = \frac{\text{eau initiale}}{\text{masse du gâteau initial}} \times 100$$

On observe que par rapport à l'essai comparatif 2, l'ajout combiné d'une suspension de silice telle que définie dans l'invention et d'un latex dans l'essai 2 conduit à des propriétés de ressuage supérieures à celles obtenues avec la suspension de silice seule.

En outre, on observe que l'addition de latex seul dans l'essai comparatif 3 conduit à une composition cimentaire ayant des mauvaises propriétés de ressuage et de ségrégation.

Par conséquent, les excellentes propriétés anti-ressuage et de ségrégation des additifs selon l'invention sont tout à fait inattendues dans la mesure où l'homme du métier se serait attendu à une diminution des propriétés de ressuage et de ségrégation en combinant une suspension aqueuse de silice avec un latex et non à une amélioration.

Les résultats sont rassemblés dans le Tableau 2 ci-dessous.

TABLEAU 2

| Essai | Additif | E/C | Viscosité mPa.s | Ressuage statique | | Ressuage dynamique (rétention d'eau sous pression) | | | | |
|---|---|---|---|---|---|---|---|---|---|---|
| | | | | Ressuage | Tassement | Er % | Tf % | Ti % | Extrait sec supérieur % | Extrait sec inférieur % |
| Comp. 1 | Silice seule | 0,28 | 140 (comportement thixotrope) | aucun | aucun | 7,1 | 15,7 | 22 | 83 | 84 |
| Comp. 2 | Silice seule | 0,35 | 65 | léger | oui | 10,5 | 17,2 | 26 | 80,7 | 85,4 |
| Comp. 3 | Latex seul | 0,28 | 80 | 3,5 ml | important | 5,5 | 17,3 | 22 | 0 (*) | 87 |
| 1 | Silice + latex | 0,28 | 93 | aucun | aucun | 9,5 | 13,7 | 22 | 86 | 86,4 |
| 2 | Silice + latex | 0,35 | 50 | aucun | aucun | 12,5 | 15,3 | 26 | 85 | 85 |

(*) décantation importante conduisant à un bouchage du filtre

Il apparaît des résultats précédents que la silice utilisée seule dans l'essai comparatif 1 conduit à un coulis homogène stable mais qui a tendance à former un gel au repos (qui se déstructure cependant sous faible cisaillement). Toutefois, lorsque le rapport E/C augmente, une tendance au ressuage et au tassement (ségrégation) apparaît. Dans l'essai de ressuage en dynamique, le gâteau obtenu est plus hétérogène, ce qui explique le tassement observé en statique. La silice est en limite d'efficacité.

Dans l'essai comparatif 3, la tendance au ressuage et à la ségrégation est très importante en statique et sous pression. Le latex n'a pas d'effet avantageux vis-à-vis de ces phénomènes.

Dans l'essai 1, on note par rapport à l'essai comparatif 1 une moindre tendance à gélifier, le comportement du coulis étant quasi-newtonien. Le coulis ne présente aucun problème de ressuage ni de ségrégation : il reste parfaitement homogène en mode statique aussi bien que dynamique, bien qu'il soit bien plus fluide que le coulis de l'essai comparatif 1.

Dans l'essai 2, alors que le rapport E/C est de 0,35, le coulis reste parfaitement stable et homogène en mode statique et dynamique, contrairement au coulis de l'essai comparatif 2.

En outre, bien que le coulis soit plus fluide (50 mPa.s contre 65), on observe une bien meilleure rétention d'eau dans l'essai 2.

## Revendications

1. Suspension aqueuse comprenant un mélange d'au moins une suspension aqueuse de silice précipitée et d'au moins un latex, dans lequel ladite suspension aqueuse de silice précipitée présente une teneur en matière sèche comprise entre 10 et 40 % en poids, a une viscosité inférieure à $4.10^{-2}$ Pa.s pour un cisaillement de 50 $s^{-1}$ et produit après centrifugation à 7 500 tours par minute pendant 30 minutes un surnageant contenant plus de 50 % du poids de la silice initialement en suspension.

2. Suspension selon la revendication 1, caractérisée en ce que le latex comprend un produit de la polymérisation d'au moins un monomère à insaturation éthylénique, notamment choisi parmi le styrène, le butadiène, l'acide acrylique, l'acide méthacrylique, les esters d'acide acrylique ou méthacrylique, les esters vinyliques et leurs mélanges.

3. Suspension selon l'une quelconque des revendications précédentes, caractérisée en ce que le latex présente une taille de particule de 0,1 à 5 μm.

4. Suspension selon l'une quelconque des revendications 1 ou 2, caractérisée en ce que le latex présente une taille de particule d'au plus 100 nm.

5. Suspension selon l'une quelconque des revendications 1 à 4, caractérisée en ce qu'elle comprend de 3 à 25 parties en poids de silice, exprimée en poids sec, pour 100 parties de suspension.

6. Suspension selon l'une quelconque des revendications 1 à 5, caractérisée en ce qu'elle comprend de 5 à 50 parties en poids de latex, exprimée en poids sec, pour 100 parties de suspension.

7. Composition à base d'un liant minéral, notamment de ciment et d'eau, caractérisée en ce qu'elle comprend une suspension selon l'une des revendications 1 à 6.

8. Composition selon la revendication 7, caractérisée en ce qu'elle comprend de 0,3 à à 5 % en poids de silice, exprimée en poids sec, par rapport au liant, de préférence de 0,8 à 1,5 %.

9. Composition selon l'une quelconque des revendications 7 ou 8, caractérisée en ce qu'elle comprend de 0,2 à 50 % en poids de latex, exprimé en poids sec, par rapport au liant, de préférence entre 3 et 30 %.

10. Composition selon l'une quelconque des revendications 7 à 9, caractérisée en ce qu'elle comprend au moins un agent fluidifiant en une teneur de 0,1 à 10 % en poids par rapport au liant.

11. Composition selon la revendication 10, caractérisée en ce que l'agent fluidifiant est choisi parmi les lignosulfonates, la caséine, les polynaphtalène, en particulier les polynaphtalène sulfonates de métaux alcalins, les mélamines, les polymélamines, les dérivés du formaldéhyde, les polyacrylates de métaux alcalins, les polycarboxylates de métaux alcalins et les polyoxyde d'éthylène greffés.

**12.** Composition selon l'une quelconque des revendications 7 à 9, caractérisée en ce qu'elle comprend au moins un agent rétenteur d'eau en une teneur de 0,01 à 10 % en poids par rapport au liant.

**13.** Composition selon la revendication 12, caractérisée en ce que l'agent rétenteur d'eau est choisi parmi les alcools polyvinyliques éventuellement modifiés, les polyéthylène glycols, les polyoxyéthylènes, les polymères acryliques, notamment les polyacrylamides, les polysaccharides d'origine bactérienne, les gommes guar, les gommes guar cationisées, les extraits de graine de caroube, les alginates, les pectines, les celluloses, les éthers cellulosiques, notamment les carboxyalkyl celluloses, alkylcelluloses, hydroxyalkylcelluloses, les méthylhydroxypropylcelluloses, la polyvinylpyrrolidone, les sucres, les amidons de maïs, froments cationisés ou non, les lignites, léonardites et produits dérivés, des polyacrylates alcalins, et les polystyrènesulfonates.

**14.** Composition selon l'une quelconque des revendication 7 à 13, caractérisée en ce qu'elle comprend un agent accélérateur de prise en une teneur de 0,01 à 3 % en poids par rapport au liant.

**15.** Composition selon l'une quelconque des revendication 7 à 14, caractérisée en ce qu'elle comprend des fibres de renforcement.

**16.** Composition selon l'une quelconque des revendications 7 à 15, caractérisée en ce que le rapport pondéral de l'eau au liant est de 0,3 à 2.

**17.** Composition de béton caractérisée en ce qu'elle comprend un liant minéral, des granulats et une suspension aqueuse selon l'une des revendications 1 à 6.

**18.** Composition selon la revendication 15, caractérisée en ce que le rapport pondéral de l'eau au liant est de 0,3 à 2.

**19.** Utilisation d'une composition selon l'une quelconque des revendications 7 à 16 pour la préparation de bétons de spécialité, notamment les bétons fluides, les bétons pour la fabrication de dallages, les bétons sous-marins, les bétons de parement, les enduits de lissage et de ragréage des sols, les bétons étanches, les bétons légers ou les bétons colorés, les bétons pour sols industriels, les bétons préfabriqués par centrifugation ou pressage à chaud, les bétons de cimentation des puits de pétrole.

**20.** Utilisation d'une suspension selon l'une quelconque des revendications 1 à 6 en tant qu'agent anti-ségrégation dans des compositions cimentaires ou dans des compositions de béton.

**21.** Utilisation d'une suspension selon l'une quelconque des revendications 1 à 6 en tant qu'agent réduisant la perméabilité aux gaz et aux liquides dans des compositions cimentaires ou dans des compositions de béton.

**22.** Utilisation d'une suspension selon l'une quelconque des revendications 1 à 6 en tant qu'agent permettant la rétention d'eau dans des compositions cimentaires ou dans des compositions de béton.

**Patentansprüche**

**1.** Wäßrige Suspension, umfassend ein Gemisch aus mindestens einer wäßrigen Kieselhydrogel-Suspension und mindestens einem Latex, wobei die wäßrige Kieselhydrogel-Suspension einen Gehalt, ausgedrückt als Trockensubstanz, von 10 bis 40 Gew.% aufweist, eine Viskosität unter $4 \cdot 10^{-2}$ Pa·s bei einer Scherung von 50 s$^{-1}$ hat und nach der Zentrifugation bei 7500 U/min während 30 Minuten einen Überstand bildet, der mehr als 50 Gew.% des ursprünglich in Suspension befindlichen Kieselsäureanhydrids enthält.

**2.** Suspension nach Anspruch 1, dadurch gekennzeichnet, daß der Latex ein Polymerisationsprodukt mindestens eines Monomers mit ethylenischen Ungesättigtheiten, das insbesondere ausgewählt ist aus Styrol, Butadien, Acrylsäure, Methacrylsäure, Estern der Acrylsäure oder der Methacrylsäure, Vinylestern oder deren Gemischen, umfaßt.

**3.** Suspension nach einem der vorhergehenden Ansprüche, dadurch gekennzeichnet, daß der Latex eine Teilchengröße von 0,1 bis 5 µm aufweist.

**4.** Suspension nach einem der Ansprüche 1 oder 2, dadurch gekennzeichnet, daß der Latex eine Teilchengröße von höchstens 100 nm aufweist.

5. Suspension nach einem der Ansprüche 1 bis 4, dadurch gekennzeichnet, daß sie 3 bis 25 Gewichtsteile Kieselsäureanhydrid, ausgedruckt als Trockengewicht, auf 100 Teile der Suspension enthält.

6. Suspension nach einem der Ansprüche 1 bis 5, dadurch gekennzeichnet, daß sie 5 bis 50 Gewichtsteile Latex, ausgedrückt als Trockengewicht, auf 100 Teile der Suspension enthält.

7. Zusammensetzung auf der Basis eines anorganischen Bindemittels, insbesondere Zement und Wasser, dadurch gekennzeichnet, daß sie eine Suspension nach einem der Ansprüche 1 bis 6 umfaßt.

8. Zusammensetzung nach Anspruch 7, dadurch gekennzeichnet, daß sie 0,3 bis 5 Gew.% Kieselsäureanhydrid, ausgedrückt als Trockengewicht, bezogen auf das Bindemittel, und vorzugsweise 0,8 bis 1,5 Gew.% umfaßt.

9. Zusammensetzung nach einem der Ansprüche 7 oder 8, dadurch gekennzeichnet, daß sie 0,2 bis 50 Gew.% Latex, ausgedrückt als Trockengewicht, bezogen auf das Bindemittel, und vorzugsweise 3 bis 30 Gew.% umfaßt.

10. Zusammensetzung nach einem der Ansprüche 7 bis 9, dadurch gekennzeichnet, daß sie mindestens ein Fluidisierungsmittel in einer Menge von 0,1 bis 10 Gew.%, bezogen auf das Bindemittel, umfaßt.

11. Zusammensetzung nach Anspruch 10, dadurch gekennzeichnet, daß das Fluidisierungsmittel ausgewählt ist aus Lignosulfonaten, Casein, Polynaphthalinen, insbesondere Alkalimetallpolynaphthalinsulfonaten, Melaminen, Polymelaminen, Formaldehydderivaten, Alkalimetallpolyacrylaten, Alkalimetallpolycarboxylaten und gepfropften Polyethylenoxiden.

12. Zusammensetzung nach einem der Ansprüche 7 bis 9, dadurch gekennzeichnet, daß sie mindestens ein Wasserrückhaltemittel in einer Menge von 0,01 bis 10 Gew.%, bezogen auf das Bindemittel, umfaßt.

13. Zusammensetzung nach Anspruch 12, dadurch gekennzeichnet, daß das Wasserrückhaltemittel ausgewählt ist aus gegebenenfalls modifizierten Polyvinylalkoholen, Polyethylenglycolen, Polyoxyethylenen, Acrylpolymeren, insbesondere Polyacrylamiden, Polysacchariden bakteriellen Ursprungs, Guargummis, kationischen Guargummis, Johannisbrotkernextrakten, Alginaten, Pektinen, Cellulosen, celluloseethern, insbesondere Carboxyalkylcellulosen, Alkylcellulosen, Hydroxyalkylcellulosen, Methylhydroxypropylcellulosen, Polyvinylpyrrolidon, Zuckern, Maisstärkemehlen, kationischem oder nicht kationischem Weizen, Ligniten, Leonharditen und abgeleiteten Produkten, alkalischen Polyacrylaten und Polystyrolsulfonaten.

14. Zusammensetzung nach einem der Ansprüche 7 bis 13, dadurch gekennzeichnet, daß sie einen Abbindebeschleuniger in einer Menge von 0,01 bis 3 Gew.%, bezogen auf das Bindemittel, umfaßt.

15. Zusammensetzung nach einem der Ansprüche 7 bis 14, dadurch gekennzeichnet, daß sie Verstärkungsfasern umfaßt.

16. Zusammensetzung nach einem der Ansprüche 7 bis 15, dadurch gekennzeichnet, daß das Gewichtsverhältnis von Wasser zu Bindemittel 0,3 bis 2 beträgt.

17. Betonzusammensetzung, dadurch gekennzeichnet, daß sie ein anorganisches Bindemittel, Granulate und eine wäßrige Suspension nach einem der Ansprüche 1 bis 6 umfaßt.

18. Zusammensetzung nach Anspruch 15, dadurch gekennzeichnet, daß das Gewichtsverhältnis von Wasser zu Bindemittel 0,3 bis 2 beträgt.

19. Verwendung einer Zusammensetzung nach einem der Ansprüche 7 bis 16 zur Herstellung von Spezialbetons, insbesondere Fließbetons, Betons zur Herstellung von Platten, Unterwasserbetons, Sichtbetons, Bodenglättungs- und-endbearbeitungsüberzügen, wasserdichten Betons, Leichtbetons oder Farbbetons, Betons für Industriefußböden, durch Zentrifugation oder Heißpressen vorgefertigten Betons und Betons zur Zementierung von Erdölquellen.

20. Verwendung einer Suspension nach einem der Ansprüche 1 bis 6 als Mittel gegen Entmischung in Zementzusammensetzungen oder Betonzunammensetzungen.

21. Verwendung einer Suspension nach einem der Ansprüche 1 bis 6 als Mittel zur Verringerung der Gas- und Flüssigkeitsdurchlässigkeit in Zementzusammensetzungen oder Betonzusammensetzungen.

22. Verwendung einer Suspension nach einem der Ansprüche 1 bis 6 als Mittel zum Zurückhalten von Wasser in Zementzusammensetzungen oder Betonzusammensetzungen.

## Claims

1. Aqueous suspension including a mixture of at least one aqueous precipitated silica suspension and at least one latex, wherein said aqueous precipitated silica suspension has a dry matter content of 10-40 wt % and a viscosity of less than $4.10^{-2}$ Pa.s for a shear of 50 $s^{-1}$ and produces, after centrifuging at 7500 rpm for 30 minutes, a supernatant containing more than 50 % of the weight of the silica originally in the suspension.

2. Suspension according to claim 1, characterised in that the latex includes a polymerisation product of at least one monomer with ethylenic nonsaturation, selected particularly from styrene, butadiene, acrylic acid, methacryclic acid, acrylic or methacrylic acid esters, vinyl esters and their mixtures.

3. Suspension according to any one of the preceding claims, characterised in that the latex has a particle size of between 0.1 and 5 µm.

4. Suspension according to any one of claims 1 or 2, characterised in that the latex has a particle size of 100 nm at the most.

5. Suspension according to any one of claims 1 to 4, characterised in that it includes between 3 and 25 parts by weight of silica, expressed in dry weight, per 100 parts of suspension.

6. Suspension according to any one of claims 1 to 5, characterised in that it includes between 5 and 50 parts by weight of latex, expressed in dry weight, per 100 parts of suspension.

7. Inorganic binder composition, particularly of cement and water, characterised in that it includes a suspension according to one of claims 1 to 6.

8. Composition according to claim 7, characterised in that it includes between 0.3 and 5 wt % of silica, expressed in dry weight, in relation to the binder, preferably between 0.8 and 1.5 %.

9. Composition according to any one of claims 7 or 8, characterised in that it includes between 0.2 and 50 wt % of latex, expressed in dry weight, in relation to the binder, preferably between 3 and 30 %.

10. Composition according to any one of claims 7 to 9, characterised in that it includes a fluidifying agent in a content of 0.1 to 10 wt % in relation to the binder.

11. Composition according to claim 10, characterised in that the fluidifying agent is selected from lignone sulphonates, casein, polynaphthalenes, in particular the polynaphthalene sulphonates of alkali metals, melamines, polymelamines, the derivatives of formaldehyde, the polyacrylates of alkali metals, the polycarboxylates of alkali metals and grafted ethylene polyoxides.

12. Composition according to any one of claims 7 to 9, characterised in that it includes at least one water-retaining agent in a content of 0.01 to 10 wt % in relation to the binder.

13. Composition according to claim 12, characterised in that the water-retaining agent is selected from polyvinyl alcohols, possibly modified, polyethylene glycols, polyoxyethylenes, acrylic polymers, particularly polyacrylamides, polysaccharides of bacterial origin, guar gums, cationised guar gums, extracts of carob seed, alginates, pectins, celluloses, cellulosic ethers, particularly carboxylalkyl celluloses, alkyl celluloses, hydroxyalkyl celluloses, methylhydroxypropyl celluloses, polyvinyl pyrrolidone, sugars, maize starches, cationised or non-cationised wheats, lignites, leonhardites and derived products, alkaline polyacrylates, and polystyrene sulphonates.

**14.** Composition according to any one of claims 7 to 13, characterised in that it includes an accelerating agent in a content of 0.01 to 3 wt % in relation to the binder.

**15.** Composition according to any one of claims 7 to 14, characterised in that it includes reinforcing fibres.

**16.** Composition according to any one of claims 7 to 15, characterised in that the weight ratio of the water to the binder is 0.3 to 2.

**17.** Concrete composition characterised in that it includes an inorganic binder, aggregates and an aqueous suspension according to one of claims 1 to 6.

**18.** Composition according to claim 15, characterised in that the weight ratio of the water to the binder is 0.3 to 2.

**19.** Use of a composition according to any one of claims 7 to 16 for the preparation of speciality concretes, particularly fluid concretes, concretes for the manufacture of paving, submerged concretes, facing concretes, coatings for filling and smoothing floors, impermeable concretes, lightweight or coloured concretes, concretes for industrial floors, concretes prefabricated by centrifuging or hot pressing, concretes for cementing oil wells.

**20.** Use of a suspension according to any one of claims 1 to 6 as an anti-segregation agent in cement compositions or in concrete compositions.

**21.** Use of a suspension according to any one of claims 1 to 6 as an agent for reducing the permeability to gases and to liquids in cement compositions or in concrete compositions.

**22.** Use of a suspension according to any one of claims 1 to 6, as an agent permitting the retention of water in cement compositions or in concrete compositions.